# EUROPÄISCHE PATENTSCHRIFT

(11) **EP 3 988 475 B1**
(45) Veröffentlichungstag und Bekanntmachung des Hinweises auf die Patenterteilung: **04.12.2024**
(21) Anmeldenummer: 21203392.2
(22) Anmeldetag: 19.10.2021
(51) Int. Cl.: B65G 1/00, B65G 1/02

(54) **KOLLISIONSWARNSYSTEM MIT MINDESTENS EINEM FLURFÖRDERZEUG UND MINDESTENS EINER KOLLISIONSMELDEEINRICHTUNG**
COLLISION WARNING SYSTEM WITH AT LEAST ONE INDUSTRIAL TRUCK AND AT LEAST ONE COLLISION REPORTING DEVICE
SYSTÈME D'AVERTISSEMENT DE COLLISION POURVU D'AU MOINS UN CHARIOT DE MANUTENTION ET D'AU MOINS UN DISPOSITIF DE DÉTECTION DE COLLISION

(30) Priorität: 21.10.2020 DE 102020127745
(43) Veröffentlichungstag der Anmeldung: 27.04.2022
(73) Patentinhaber: Jungheinrich Aktiengesellschaft, 22047 Hamburg (DE)
(72) Erfinder: Bahnholzer, René, 22159 Hamburg (DE); Neipp, Jesco, 22049 Hamburg (DE); Riedel, Lukas, 20255 Hamburg (DE); Wetegrove, Ralf, 22850 Norderstedt (DE)
(74) Vertreter: Hauck Patentanwaltspartnerschaft mbB

(56) Entgegenhaltungen:
- EP-A1- 3 035 074
- WO-A1-2021/186077
- DE-A1- 102009 006 174
- DE-A1- 102010 052 108
- GB-A- 2 550 586
- KR-A- 20130 045 877

## Beschreibung

Die vorliegende Erfindung betrifft ein Kollisionswarnsystem, wobei das System aus mindestens einem Flurförderzeug und mindestens einer Kollisionsmeldeeinrichtung besteht.

In dem Einsatzgebiet von Flurförderzeugen bilden Regalständer einen besonders sensiblen Teil eines stehenden Regals, da sie bauartbedingt die komplette Last des Regals tragen. Schäden an Regalständern, beispielsweise durch das Anfahren dieser mi einem Flurförderzeug können zum Umkippen oder Kollabieren des Regals führen und damit Menschen und Waren gefährden.

Aus US 2014/0361883 A1 ist ein Kollisionssensoraufbau bekannt geworden, der an einer Regalstruktur montiert, einen Kontakt mit einem beweglichen Arbeitsfahrzeug erfasst. Der Sensor erfasst die Kollision und ein Ausgangssignalgenerator erzeugt ein Signal, beispielsweise ein aufleuchtendes Licht, aber auch eine SMS-Nachricht oder eine E-Mail mit einer Schadensmeldung zu der Kollision.

Aus EP 3 315 432 A1 ist eine Regalträgerschutzeinrichtung bekannt, die einen Kollisionssensor und ein Übertragungsmodul aufweist. Bei der Kollisionsmeldung werden Daten von der Übertragungseinheit an einen übergeordneten, zentralen Rechner übermittelt. Von diesem zentralen Rechner wird die Nachricht an den zuständigen Lagermanager geschickt, der die Kollisionsmeldung dann bestätigen kann.

Aus DE 10 2010 052 108 A1 ist ein Aufprallkörper zum Schutz eines Bauteils bekannt geworden. Der Aufprallkörper ist mit einem Drucksensor ausgestattet, der seine Messsignale mithilfe einer Empfangs- und Sendevorrichtung an stationär im Lager montierte Empfänger sendet. Dabei ist ein Empfänger für mehrere Aufprallkörper im Lager der entsprechende Empfänger, der die Signale zur Kollision auswertet oder weiterleitet.

Nachteilig bei all diesen bekannten Konzepten zum Aufprall- oder Rammschutz im Lager ist es, dass der Fahrer nicht unmittelbar über die Kollision informiert wird und so nicht auf die festgestellte Kollision reagieren kann.

WO 2021/186077 A1 ist Stand der Technik nach Art. 54 (3) EPÜ.

Aus GB 2 550 586 A ist ein Regalschutzgerät bekannt, das ein Gehäuse und einen Vibrationsmonitor aufweist, der ausgelegt ist, die durch eine Regalkomponente übertragenen Vibrationen aufzuzeichnen. Das Gehäuse besitzt eine Alarmeinheit, die einen Benutzer darauf hinweist, wenn das Regal zu inspizieren ist. Der Vibrationsmonitor zeichnet die Frequenz und die Zeit von jedem Zusammenstoß auf und besitzt einen Speicher, der die Anzahl von kleineren Zusammenstößen aufakkumuliert, um den Benutzer nach einer vorbestimmten Anzahl von kleineren Zusammenstößen oder einem schweren Zusammenstoß zu alarmieren. Auch ist bekannt, die Sensoreinheit derart auszubilden, dass sie mit Sendern oder Sensoren in einem Flurförderzeug zusammenarbeitet.

Aus EP 3 035 074 A1 ist ein Verfahren und ein Gerät zur Vermeidung von Kollisionen bei sich bewegenden Fahrzeugen bekannt. Hierzu wird die Fahrzeugposition und die Fahrzeugbewegung innerhalb einer vorgesehenen Betriebszone erfasst. Das System erhält die Information über die Position von jedem Fahrzeug und bestimmt daraus eine vorhergesagte Trajektorie für jedes Fahrzeug. Basierend auf den vorhergesagten Trajektorien werden potentielle Kollisionen erkannt.

Aus DE 10 2009 006 174 A1 ist ein Flurförderzeug mit einer Unfallerfassung bekannt. Das Flurförderzeug ist hierzu mit Sensormitteln zur Erfassung von Unfallereignissen ausgestattet, wobei mindestens zwei Unfallsensoren vorgesehen sind, von denen einer an einem Bauteil angeordnet ist, das durch Unfallereignisse beschädigt werden kann.

Aus DE 10 2010 052 108 A1 ist ein Aufprallkörper zum Schutz eines Bauteils bekannt geworden, der einen Drucksensor zur Messung von Druckwellen erfasst, wobei die Druckwellen sich in einem mit Gas gefüllten Hohlraum ausbreiten.

Aus US 2014/0361883 A1 ist eine an einem Regal anbringbare Kollisionssensoreinheit bekannt, die ein Kollisionssignal erzeugt.

Der Erfindung liegt die Aufgabe zugrunde ein Kollisionswarnsystem zur Verfügung zu stellen, das eine zuverlässige Weiterleitung der Kollisionsinformationen sicherstellt.

Erfindungsgemäß wird die Aufgabe durch ein Kollisionswarnsystem mit den Merkmalen aus Anspruch 1 gelöst, vorteilhafte Ausgestaltungen bilden die Gegenstände der Unteransprüche.

Das erfindungsgemäße Kollisionswarnsystem besteht aus mindestens einem Flurförderzeug und mindestens einer Kollisionsmeldeeinrichtung. Die Kollisionsmeldeeinrichtung weist eine Montageeinheit, eine stoßempfindliche Sensoreinheit, eine Datenverarbeitungseinheit und eine Sendeeinheit auf. Der stoßempfindliche Sensor erfasst hierbei einen Impuls oder einen Impulsübertrag. Bei dem erfindungsgemäßen Kollisionswarnsystem ist die Montageeinheit dazu ausgebildet, mindestens die Sensoreinheit an einem auf Kollision hin zu überwachendem Regalsystem zu befestigen. Die Sensoreinheit wiederum ist dazu ausgebildet, einen Impulsübertrag von dem Flurförderzeug auf das Regalsystem zu messen und an die Datenverarbeitungseinheit anzulegen. Die Datenverarbeitungseinheit vergleicht den gemessenen Impuls mit einem Referenzimpuls und steuert bei Überschreiten des Referenzimpulses die Sendeeinheit an, um ein Kollisionssignal auszusenden.

Der besondere Vorteil des erfindungsgemäßen Kollisionswarnsystems besteht darin, dass das Flurförderzeug eine auf die Sendeeinheit abgestimmte Empfangseinheit aufweist, die dazu ausgelegt ist, das ausgesendete Kollisionssignal der Sendeeinheit zu empfangen und einen Warnhinweis an dem Flurförderzeug auszulösen. Im Gegensatz zu dem einleitend diskutierten Stand der Technik besteht der Unterschied darin, dass hier das Flurförderzeug mit in die Kommunikation eingebunden ist. Dies bietet zahlreiche Vorteile: so kann beispielsweise direkt ein Warnhinweis aus dem Flurförderzeug ausgelöst werden, so dass die entsprechende Bedienperson darauf reagieren kann. Ebenso ist es möglich, die Sendeeinheit der Kollisionsmeldeeinrichtung leistungsschwächer auszugestalten, da sich das empfangene Flurförderzeug unmittelbar nach der Kollision in der Nähe des Regals befindet. Hinzu kommt, dass mit dem Übertragen des Kollisionssignals an das Flurförderzeug, die Daten bei einer Übermittlung an eine übergeordnete oder zentrale Stelle, um eine oder mehrere zusätzliche Informationen erweitert werden kann. Indem das Flurförderzeug selbst in die Informationskette eingebunden wird, kann ein bereits vorhandener Kommunikationskanal an dem Fahrzeug genutzt werden und die zu übermittelnden Kollisionssignale um fahrzeugspezifische Informationen ergänzt werden, wie beispielsweise Geschwindigkeit, Ladung und/oder Lenkwinkeleinschlag.

Erfindungsgemäss werden fahrzeuginterne Signale (z.B.: Beschleunigungssensor) ausgewertet, um das empfangene Kollisionssignal an dem Fahrzeug zu bestätigen. Im praktischen Einsatz kann es vorkommen, dass das Kollisionssignal von weiteren Fahrzeugen empfangen wird. In diesem Fall kann die Auswertung eines fahrzeuginternen Signals, beispielsweise eines Beschleunigungssensors dann die Kollision bestätigen. Wird das Kollisionssignal nicht bestätigt, so verwirft das Flurförderzeug das empfangene Kollisionssignal.

Erfindungsgemäss wird das empfangene Kollisionssignal von dem Flurförderzeug an ein übergeordnetes Lagersystem weitergeleitet, wobei hier eine oder mehrere zusätzliche Informationen weitergeleitet werden. Bevorzugt handelt es sich hierbei um eine oder mehrere der folgenden Informationen: Identifikation des kollidierenden Flurförderzeugs, Zeitpunkt der Kollision, Ort der Kollision, Geschwindigkeit des Fahrzeugs bei Kollision und Gewicht der transportierten Last des Flurförderzeugs. Diese Daten stehen bei den herkömmlichen, zentralen Kommunikationsstrukturen nicht zur Verfügung.

In einer bevorzugten Weiterbildung des erfindungsgemäßen Kollisionswarnsystems beinhaltet das gesendete und vom Flurförderzeug empfangene Kollisionssignal mindestens eine der folgenden Informationen: Identifikation der Sendeeinheit, gemessene Stärke und/oder Dauer der Kollision und Zeitpunkt der Kollision. Im Hinblick auf die gemessene Stärke und/oder Dauer der Kollision ist natürlich grundsätzlich auf den insgesamt übertragenen Impuls abzustellen. Dieser kann auf verschiedene Arten ermittelt werden, wobei Dauer und maximale Stärke grundsätzlich die Kollision und den erfolgten Impulsübertrag gut kennzeichnen können.

In einer bevorzugten Weiterbildung weist die Kollisionsmeldeeinrichtung ein Gehäuse auf, das mit der Montageeinheit an dem Regalsystem befestigbar ist. Die Verwendung eines Gehäuses für alle Bestandteile der Kollisionsmeldeeinrichtung erleichtert die Montage. Zusätzlich kann das Gehäuse ausreichend stabil zum Schutz des Sensors, der Datenverarbeitungseinheit und der Sendeeinheit ausgebildet sein.

Die Montage und der Einsatz des Kollisionswarnsystems werden besonders durch den Einsatz einer Batterie vereinfacht. Hierbei kann vorgesehen sein, dass die Batterie nur bei Bedarf die Datenverarbeitungs- und Sendeeinheit speist, diese aber ansonsten sich in einem Ruhe- oder Stand-by-Modus befinden.

Grundsätzlich ist bei dem erfindungsgemäßen Kollisionswarnsystem eine ganze Reihe von unterschiedlichen Sendeeinheiten möglich. Eine mögliche Sendeeinheit ist ein Bluetooth-Sender oder ein RFID-Sender. Beide Sender sind einfach aufgebaut und verfügen zwar über eine begrenzte Reichweite, was aber für eine Übertragung zum Flurförderzeug genügt.

In einer bevorzugten Ausgestaltung ist die Sensoreinheit als ein drei- oder sechsachsiger Beschleunigungssensor ausgebildet. Dieser erfasst den Impulsübertrag, also die Beschleunigung und ihre Richtung. Der Beschleunigungssensor kann diesen insgesamt verarbeiten.

In einer bevorzugten Weiterführung zeigt das Flurförderzeug den Wahnhinweis für eine Bedienperson optisch, akustisch oder in einem Display direkt an. Diese Anzeige ist deutlich direkter und zuverlässiger als die über eine zentrale Datenverarbeitung an das Flurförderzeug geschickte Nachricht.

Die Empfangseinheit in dem Flurförderzeug steht bevorzugt in Verbindung mit einer Fahrzeugsteuerung, die über eine Kommunikationsverbindung zu der übergeordneten Steuerung des Lagersystems verfügt.

Eine bevorzugte Ausgestaltung der Erfindung wird nachfolgend erläutert.

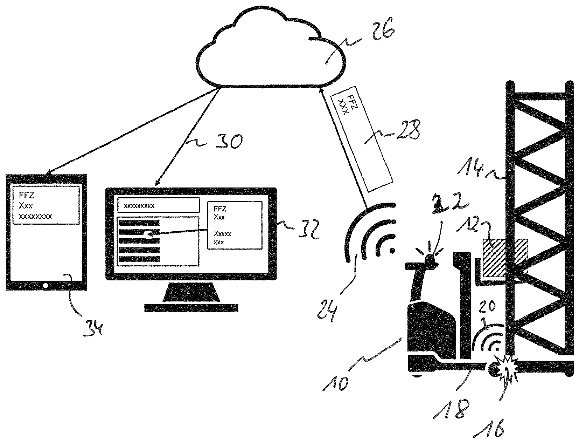

Die einzige Figur zeigt ein Flurförderzeug 10, das mit einer angehobenen Last 12 durch einen Lagerbereich mit einem Regal 14 fährt. Hierbei kommt es zu einer Kollision 16 eines der Radarme 18 mit dem Regal 14.

Die Kollision 16 möge hierbei so stark gewesen sein, dass von dem Regal 14 ein Kollisionssignal 20 gesendet wird. Das Flurförderzeug 10 verarbeitet das Kollisionssignal 20 und kombiniert dieses mit dem internen Beschleunigungssensor zur Bestätigung der Kollision und löst in dem Flurförderzeug 10 eine optische Warnanzeige 22 aus.

Neben der Warnanzeige 22 setzt das Flurförderzeug auch ein Signal 24 an eine Kollisionsnachricht 28 an eine übergeordnete Steuerung 26 ab. Die übergeordnete Steuerung 26 empfängt eine Kollisionsnachricht 28. Diese enthält beispielsweise die Identifikation des Flurförderzeugs 10 und die in dem Kollisionssignal 20 enthaltene Information zum betroffenen Regal 14. Beide Informationen zusammen können noch mit Datum und Uhrzeit versehen werden. Auch ist es grundsätzlich möglich Informationen zum Fahrer der Kollisionsnachricht 28 beizufügen.

Von der übergeordneten Steuereinheit 26 gelangen die Daten über eine Verbindung 30 zu einer zentralen Steuereinheit 32. Hier können die Daten entsprechend gesammelt und übersichtlich dargestellt werden. Über die Verbindung 30 können auch konkrete Aufträge auf mobile Endgeräte 34 gesendet werden. Ein solcher Auftrag kann beispielsweise darin bestehen, die Beschädigung an dem Regal 14 in Augenschein zu nehmen und/oder das verursachende Flurförderzeug 10 zu inspizieren.

Mit dem vorstehend beschriebenen Kollisionswarnsystem wird eine Kollisionsmeldeeinrichtungen verwendet, die an dem Regal angebracht ist und ab einer zu definierenden Kraft oder ab einer einstellbaren Stoßstärke ein entsprechendes Kollisionssignal 20 sendet. Das Kollisionssignal 20 wird von dem Flurförderzeug 10 empfangen. Das empfangene Kollisionssignal 20 bewirkt zunächst, dass eine optische, akustische oder sonstige Warnung an dem Flurförderzeug erzeugt wird. Zudem wird ein Funksignal 24 von dem Flurförderzeug 10 und einer in dem Flurförderzeug 10 vorgesehenen Sende-/Empfangseinrichtung an einen übergeordneten Empfänger 26 mit einer Kollisionsnachricht 28 gesendet. Der Inhalt dieser Kollisionsnachricht 28 setzt sich dabei aus Informationen zusammen, die von dem Regal stammen und Informationen die vom Flurförderzeug stammen. So wird beispielsweise bevorzugt der Regalständer identifiziert, eine Identifikation des Flurförderzeugs und eine Uhrzeit des Schadensereignisses zusammengefasst übertragen. Dies erlaubt es in geeigneter Weise eine verantwortliche Person für das Lager zu informieren und notwendige Schritte zu veranlassen.

### Bezugszeichenliste

- 10: Flurförderzeug
- 12: Last
- 14: Regal
- 16: Kollision
- 18: Radarme
- 20: Kollisionssignal
- 22: Warnanzeige
- 24: Signal
- 26: Steuerung / Empfänger
- 28: Kollisionsnachricht
- 30: Verbindung
- 32: Steuereinheit
- 34: Endgeräte

## Patentansprüche

1. Kollisionswarnsystem mit mindestens einem Flurförderzeug (10) und mindestens einer Kollisionsmeldeeinrichtung, die eine Montageeinheit, eine stoßempfindliche Sensoreinheit, eine Datenverarbeitungseinheit und eine Sendeeinheit aufweist, wobei
a. die Montageeinheit dazu ausgebildet ist, mindestens die Sensoreinheit an einem auf Kollisionen (16) hin zu überwachenden Regalsystem (14) zu befestigen,
b. die Sensoreinheit dazu ausgebildet ist, einen Impulsübertrag von dem Flurförderzeug (10) auf das Regalsystem (14) zu messen und an die Datenverarbeitungseinheit anzulegen,
c. die Datenverarbeitungseinheit den gemessenen Impuls mit einem Referenzimpuls vergleicht und bei Überschreiten des Referenzimpulses die Sendeeinheit für ein Aussenden eines Kollisionssignals (20) ansteuert,
wobei das Flurförderzeug (10) eine auf die Sendeeinheit abgestimmte Empfangseinheit aufweist,
**dadurch gekennzeichnet, dass**
die Empfangseinheit dazu ausgelegt ist, das ausgesendete Kollisionssignal (20) zu empfangen und einen Warnhinweis (22) an dem Flurförderzeug (10) auszulösen und das Flurförderzeug (10) dazu ausgelegt ist, das empfangene Kollisionssignal (20) an ein übergeordnetes Lagersystem weiterzuleiten, wobei hier eine oder mehrere zusätzliche Informationen mit dem Kollisionssignal (20) an das übergeordnete Lagersystem weitergeleitet werden, wobei das empfangene Kollisionssignal mit einem oder mehreren fahrzeuginternen Signalen verglichen wird, um eine Kollision mit dem Flurförderzug zu bestätigen.

2. Kollisionswarnsystem nach Anspruch 1, **dadurch gekennzeichnet, dass** die zusätzlichen Informationen mit dem Kollisionssignal (20) einen oder mehrere der folgenden Informationen betreffen: Identifikation des kollidierenden Flurförderzeugs (10), Zeitpunkt der Kollision, Ort der Kollision, Geschwindigkeit des Fahrzeugs bei der Kollision und Gewicht der transportierten Last des Flurförderzeugs.

3. Kollisionswarnsystem nach Anspruch 1 oder 2, **dadurch gekennzeichnet, dass** das gesendete Kollisionssignal (20) mindestens eine der folgenden Informationen aufweist: Identifikation der Sendeeinheit, gemessene Stärke und/oder Dauer der Kollision und Zeitpunkt der Kollision.

4. Kollisionswarnsystem nach einem der Ansprüche 1 bis 3, **dadurch gekennzeichnet, dass** die Kollisionsmeldeeinrichtung ein Gehäuse aufweist, das mit der Montageeinheit an dem Regalsystem befestigbar ist.

5. Kollisionswarnsystem nach einem der Ansprüche 1 bis 4, **dadurch gekennzeichnet, dass** die Kollisionsmeldeeinrichtung eine Batterie aufweist, die bei Bedarf die Datenverarbeitungs- und Sendeeinheit speist.

6. Kollisionswarnsystem nach einem der Ansprüche 1 bis 5, **dadurch gekennzeichnet, dass** als Sendeeinheit ein Bluetooth-Sender oder ein RFID-Sender vorgesehen ist.

7. Kollisionswarnsystem nach einem der Ansprüche 1 bis 6, **dadurch gekennzeichnet, dass** der Referenzimpuls für die Sensoreinheit einstellbar ist.

8. Kollisionswarnsystem nach einem der Ansprüche 1 bis 7, **dadurch gekennzeichnet, dass** die Sensoreinheit einen drei- oder sechsachsiger Beschleunigungssensor aufweist.

9. Kollisionswarnsystem nach einem der Ansprüche 1 bis 8, **dadurch gekennzeichnet, dass** das Flurförderzeug (10) den Warnhinweis für eine Bedienperson optisch, akustisch oder in einem Display anzeigt.

10. Kollisionswarnsystem nach einem der Ansprüche 1 bis 9, **dadurch gekennzeichnet, dass** die Empfangseinheit des Flurförderzeugs mit einer Fahrzeugsteuerung verbunden ist und diese eine Kommunikationsverbindung zu dem übergeordneten Lagersystem aufwirft.

## Claims

1. A collision warning system with at least one industrial truck (10) and at least one collision reporting apparatus that comprises a mounting unit, an impact-sensitive sensor unit, a data processing unit, and a transmission unit, wherein
a. the mounting unit is designed to fasten at least the sensor unit to a rack system (14) to be monitored for collisions (16),
b. the sensor unit is designed to measure a momentum transfer from the industrial truck (10) to the rack system (14) and to apply it to the data processing unit,
c. the data processing unit compares the measured momentum with a reference momentum and actuates the transmission unit to emit a collision signal (20) if the reference momentum is exceeded,
wherein the industrial truck (10) comprises a receiving unit that is adapted to the transmission unit,
**characterized in that**
the receiving unit is designed to receive the emitted collision signal (20) and to trigger a warning (22) at the industrial truck (10) and the industrial truck (10) is designed to forward the received collision signal (20) to a higher-level storage system, wherein one or more additional items of information are forwarded here with the collision signal (20) to the higher-level storage system, wherein
the received collision signal is compared with one or more vehicle-internal signals in order to confirm a collision with the industrial truck.

2. The collision warning system according to claim 1, **characterized in that** the additional items of information with the collision signal (20) relate to one or more of the following items of information: identification of the colliding industrial truck (10), time of the collision, location of the collision, speed of the vehicle during the collision, and weight of the transported load of the industrial truck.

3. The collision warning system according to claim 1 or 2, **characterized in that** the transmitted collision signal (20) comprises at least one of the following items of information: identification of the transmission unit, measured strength and/or duration of the collision, and time of the collision.

4. The collision warning system according to any one of claims 1 to 3, **characterized in that** the collision reporting apparatus comprises a housing that can be fastened to the rack system by means of the mounting unit.

5. The collision warning system according to any one of claims 1 to 4, **characterized in that** the collision reporting apparatus comprises a battery which powers the data processing and transmission unit as needed.

6. The collision warning system according to any one of claims 1 to 5, **characterized in that** a Bluetooth transmitter or RFID transmitter is provided as the transmission unit.

7. The collision warning system according to any one of claims 1 to 6, **characterized in that** the reference momentum can be adjusted for the sensor unit.

8. The collision warning system according to any one of claims 1 to 7, **characterized in that** the sensor unit comprises a three- or six-axis acceleration sensor.

9. The collision warning system according to any one of claims 1 to 8, **characterized in that** the industrial truck (10) indicates the warning to an operator optically, acoustically, or on a display.

10. The collision warning system according to any one of claims 1 to 9, **characterized in that** the receiving unit of the industrial truck is connected to a vehicle controller and same establishes a communication link to the higher-level storage system.

## Revendications

1. Système d'avertissement de collision pourvu d'au moins un chariot de manutention (10) et d'au moins un dispositif de détection de collision présentant une unité de montage, une unité de capteur sensible aux chocs, une unité de traitement de données et une unité d'émission, dans lequel
a. l'unité de montage est conçue pour fixer au moins l'unité de capteur à un système d'étagères (14) à surveiller quant à des collisions (16),
b. l'unité de capteur est conçue pour mesurer une transmission d'impulsion du chariot de manutention (10) au système d'étagères (14) et pour l'appliquer à l'unité de traitement de données,
c. l'unité de traitement de données compare l'impulsion mesurée avec une impulsion de référence et actionne l'unité d'émission pour une émission d'un signal de collision (20) en cas de dépassement de l'impulsion de référence,
dans lequel le chariot de manutention (10) présente une unité de réception adaptée à l'unité d'émission,
**caractérisé en ce que**
l'unité de réception est conçue pour recevoir le signal de collision (20) émis et pour déclencher un message d'avertissement (22) sur le chariot de manutention (10) et le chariot de manutention (10) est conçu pour
transmettre le signal de collision (20) reçu à un système de stockage supérieur, dans lequel une ou plusieurs informations supplémentaires sont ici transmises avec le signal de collision (20) au système de stockage supérieur, dans lequel le signal de collision reçu est comparé avec un ou plusieurs signaux internes au véhicule, afin de confirmer une collision avec le chariot de manutention.

2. Système d'avertissement de collision selon la revendication 1, **caractérisé en ce que** les informations supplémentaires associées au signal de collision (20) concernent une ou plusieurs des informations suivantes : identification du chariot de manutention (10) en collision, moment de la collision, lieu de la collision, vitesse du véhicule lors de la collision et poids de la charge transportée du chariot de manutention.

3. Système d'avertissement de collision selon la revendication 1 ou 2, **caractérisé en ce que** le signal de collision (20) émis présente l'une au moins parmi les informations suivantes : identification de l'unité d'émission, force mesurée et/ou durée de la collision et moment de la collision.

4. Système d'avertissement de collision selon l'une des revendications 1 à 3, **caractérisé en ce que** le dispositif de détection de collision présente un boîtier apte à être fixé avec l'unité de montage au système d'étagères.

5. Système d'avertissement de collision selon l'une des revendications 1 à 4, **caractérisé en ce que** le dispositif de détection de collision présente une batterie, laquelle alimente l'unité de traitement de données et d'émission en cas de besoin.

6. Système d'avertissement de collision selon l'une des revendications 1 à 5, **caractérisé en ce qu'**il est prévu un émetteur Bluetooth ou un émetteur RFID en tant qu'unité d'émission.

7. Système d'avertissement de collision selon l'une des revendications 1 à 6, **caractérisé en ce que** l'impulsion de référence pour l'unité de capteur est réglable.

8. Système d'avertissement de collision selon l'une des revendications 1 à 7, **caractérisé en ce que** l'unité de capteur présente un capteur d'accélération à trois ou six axes.

9. Système d'avertissement de collision selon l'une des revendications 1 à 8, **caractérisé en ce que** le chariot de manutention (10) indique le message d'avertissement pour un opérateur de manière optique, sonore ou sur un écran.

10. Système d'avertissement de collision selon l'une des revendications 1 à 9, **caractérisé en ce que** l'unité de réception du chariot de manutention est relié à une commande de véhicule et celle-ci établit une liaison de communication avec le système de stockage supérieur.
